# EUROPEAN PATENT APPLICATION

(11) **EP 0 683 572 A2**
(43) Date of publication of application: **22.11.1995**
(21) Application number: 95303154.9
(22) Date of filing: 10.05.1995
(51) Int. Cl.: H04B 7/10

(54) **High speed indoor radiocommunication having narrow beamwidth receiving antenna**

(30) Priority: 20.05.1994 US 247172
(71) Applicant: AT&T Corp., New York, NY 10013-2412 (US)
(72) Inventor: Driessen, Peter Frank, Aberdeen, New Jersey 07747 (US)
(74) Representative: Buckley, Christopher Simon Thirsk

(57) **Abstract**

A high speed wireless data transfer system (10) for use in an indoor environment having a floor, a ceiling and at least one wall from which unwanted multipath signals are generated by reflection of the transmitted data signals includes a data source (18) for generating a data signal, a transmitter stage (14) connected to the data source and having a transmitter antenna (16) with a predetermined beamwidth positioned within the indoor environment for transmitting the data signal at a selected carrier frequency, and a receiver stage (22) having a receiver antenna (26) with a predetermined beamwidth positioned within the indoor environment for receiving the data signal transmitted at the selected carrier frequency. The receiver antenna is a directional antenna having a beamwidth selected to be sufficiently narrow, and preferably in the range of approximately 5° to 15°, as to avoid the reception of substantially all multipath signals so that the received data signal is substantially error free.

## Description

### Field of the Invention

This invention relates to wireless data transfer systems designed for indoor use. More particularly, the present invention pertains to high speed indoor wireless systems utilizing directional antennas to reduce the amount of multipath rays incident to or received by a receiver.

### Background Art

The design of high speed wireless systems (i.e. data transmission speeds greater than 150 Mb/s) for indoor use requires the consideration of many factors. A major technical consideration is the presence of multipath rays which result from the deflection of a transmitted signal in an indoor environment, e.g. reflections from the floors, walls and furniture in an office or laboratory or the like. The presence of significant multipath rays degrades a system's performance by adding distortion to the transmitted data signal, thereby resulting in an increased bit error rate and slower data transfer.

To achieve the desired high speeds of data transfer, currently employed indoor wireless systems accept the presence of multipath rays and employ multitone or equalization techniques to remove the multipath rays from the data signals after the signals are received by the receiver. An example of such a system is the Motorola Altair System which is capable of transmitting data at a rate of 3.3 Mb/s. A drawback of this system, however, is that the use of multitone or equalization techniques, which may be implemented by various electronic designs, not only increases the cost of the overall system but, more importantly, slows the rate at which data can be transmitted. Thus, it would be desirable to provide a high speed indoor wireless system having an increased data transfer rate with negligible multipath effects so that multitone or equalization techniques are not required.

### SUMMARY OF THE INVENTION

The present invention relates to high speed wireless data transfer systems for use in an indoor environment having a floor, ceiling and at least one wall from which unwanted multipath signals are generated. The inventive system comprises a source of data for generating a data signal, a transmitter connected to the data source and having a transmitter antenna with a predetermined beamwidth positioned within the indoor environment for transmitting the data signal at a selected carrier frequency, and a receiver having a receiver antenna with a predetermined beamwidth positioned within the indoor environment for receiving the data signal transmitted at the selected carrier frequency. The beamwidth of the receiver antenna is sufficiently narrow to avoid the reception of substantially all multipath signals, so that the received data signal is substantially error free. In the alternative, the beamwidth of the transmitter antenna may be sufficiently narrow as to limit the amount of multipath rays resulting from transmitter - generated signals.

In the preferred embodiment, the antennas for both the transmitter and the receiver are directional antennas having beamwidths in the range of 5° to 15°.

The present invention also relates to methods for transmitting and receiving a data signal at high speeds in a wireless data transfer system for use in an indoor environment in which unwanted multipath signals are generated and where critical regions exist. The inventive method comprises the steps of (1) generating a data signal, (2) transmitting at a selected carrier frequency the generated data signal using a transmitter positioned within the indoor environment and a transmitter antenna with a predetermined beamwidth, and (3) receiving the transmitted data signal using a receiver positioned within the indoor environment and a receiver antenna with a predetermined beamwidth. The beamwidth of the receiver antenna is sufficiently narrow to avoid the reception of substantially all multipath signals, so that the received transmitted signal is substantially error free.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### BRIEF DESCRIPTION OF THE DRAWINGS

In the drawings, wherein like reference characters denote similar elements throughout the several views:
FIG. 1 is a block diagram of a high speed wireless system constructed in accordance with the present invention;
FIG. 2 depicts the relative placement of a transmitter and receiver in a rectangular shaped room;
FIG. 3 depicts the geometric positioning of the transmitter and receiver for calculating the critical region;
FIGS. 4a-4c depict the critical regions for different transmitter locations; and
FIG. 5 depicts the critical regions for a particular transmitter location in a non-line of site (NLOS) system.

### DETAILED DESCRIPTION OF THE PREFERRED EMBODIMENT

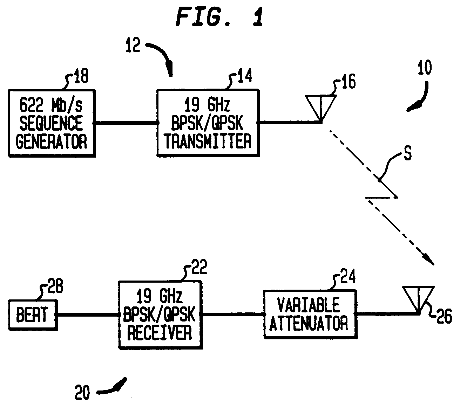

Referring now to the drawings and initially to FIG. 1 thereof, a block diagram of a high speed indoor wireless system is depicted. The system is comprised of a transmitter 12 and a receiver 20. The transmitter 12 includes a source of data, such as a sequence generator 18 for generating a data signal S which is transmitted by a transmitter stage 14 via a transmitter antenna 16 having a predetermined beamwidth, as more fully described below. The signal S is received by the receiver 20 through a receiver antenna 26 -- also having a predetermined beamwidth -- and includes a variable attenuator 24, a receiver stage 22 and a bit error rate test (BERT) unit 28 for detecting errors in the transmitted signal S. Although a phase shift keying (PSK) modulator is depicted in FIG. 1, it will be apparent to those of ordinary skill in the art that a frequency shift keying (FSK) modulator or amplitude shift keying (ASK) modulator may alternatively be employed.

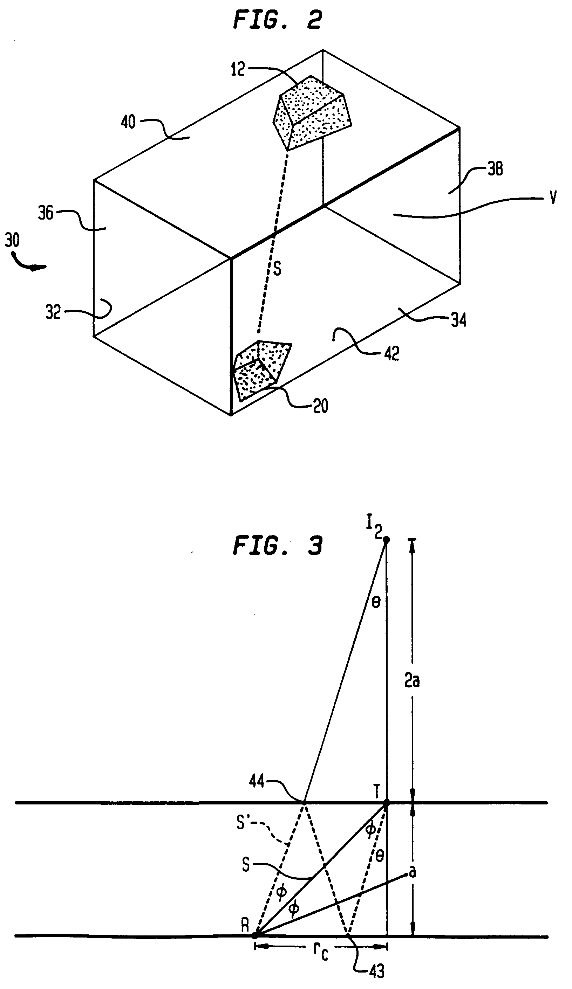

Turning now to FIG. 2, the system of the present invention is shown employed in a line of site (LOS) system contained within a room or office or other closed volumetric space 30. As depicted, the room 30 has a pair of long walls 32, 34, a pair of short walls 36, 38, a ceiling 40 and a floor 42, and an associated volume V. The transmitter 12 and the receiver 20 are shown mounted at opposite diagonal corners of the room proximate the ceiling 40 and floor 42, respectively.

A problem commonly arising in high frequency data transfer systems is that when a signal is sent by a transmitter, the signal received by the receiver may consist of the original signal plus delayed replicas of that signal which arrive later-in-time via a longer transmission path. The delayed replicas are referred to as multipath rays, whose presence at the receiver stage results in distortion and other unwanted effects.

The presence of multipath rays in an indoor environment, such as the room 30, is especially common in that indoor environments contain numerous objects and surfaces -- such as the walls, floor and ceiling of room 30 -- from which the originally transmitted signal reflects forming multipath rays that degrade the signal ultimately received by the receiver 20. The number of multipath rays in an indoor environment and their power relative to the power of the direct signal S is partially a function of the signal frequency band, the materials or structure of the walls (i.e. concrete, plaster) and the geometry of the room 30 (i.e. square, rectangular). The presence of multipath rays having significant power relative to the power of the direct signal S in an indoor environment causes a notable decrease in system performance in the form of a slower effective or practical data transmission rate.

The present invention is based on a recognition that in line of site (LOS) as well as non-line of site (NLOS) indoor wireless systems, the incidence and effects of multipath rays can be significantly reduced by utilizing highly directional antennas with narrow beamwidths at either the transmitter 12, the receiver 20 or, most preferably, at both. Thus in a LOS system, for example, if the receiver antenna 26 is directed toward the transmitter antenna 16 and has a narrow beamwidth, then so long as the receiver antenna 26 is not positioned at any so-called critical regions in the indoor environment or room 30, as more fully described below, the amount of incident multipath rays received by the receiver antenna 26 will be significantly reduced. A higher data transmission rate can accordingly be achieved without the need for multitone or equalization techniques as in the prior art.

In accordance with the present invention, the optimal beamwidth for the transmitter antenna 16 and the receiver antenna 26 is in the range of approximately 5 to 15°; when such antennas are used, a data transmission rate exceeding 1 Gb/s may be achieved with a minimal bit error rate. Although it is also contemplated that an omnidirectional or broadbeam antenna may be used for only one of either the transmitter or the receiver 12, 20, the reception of multipath rays is most significantly reduced when antennas having narrow beamwidths within the disclosed range are employed at both the receiver and transmitter.

To significantly reduce the reception of multipath rays, the receiver and transmitter antennas must be properly oriented relative to each other. If the antennas 16, 26 are of a fixed type, they may be positioned manually. In the preferred embodiment, the antennas are phased or adaptive arrays, which may be steered electronically. In most cases, the receiver antenna 26 will be directed toward the transmitter antenna 16. However, in some applications, the receiver antenna 26 may be alternatively directed toward a multipath ray transmitted by the receiver antenna 16.

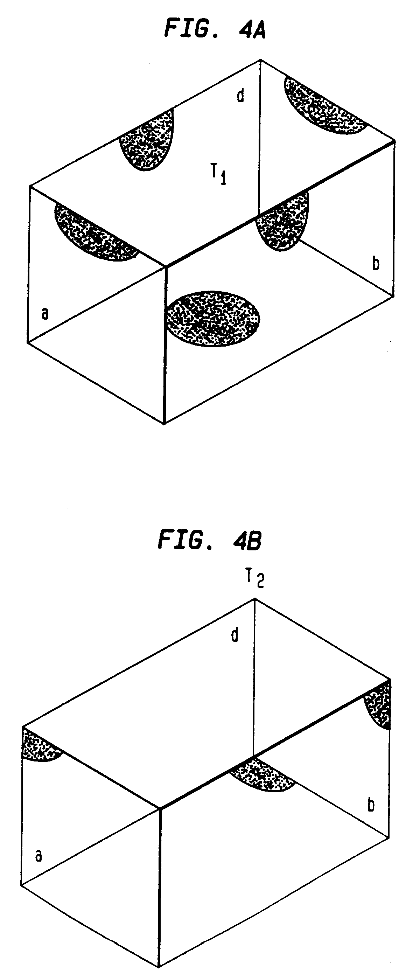

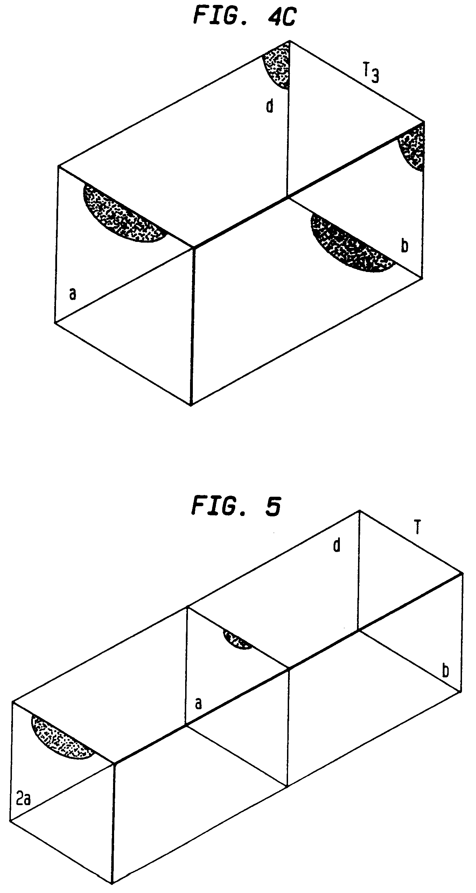

As stated above, even for a system utilizing directional antennas having narrow beamwidths there are still regions in the indoor environment or room 30 at which significant multipath rays exist. These regions are referred to as critical regions; they are present for both LOS and NLOS links in the system and their locations vary as a function of the location of the transmitter antenna 16. As is known in the art, the size of the critical region can be evaluated as a function of the antenna beamwidth. For example, and with reference to FIG. 3, the position of the transmitter antenna 16 (shown as T) with respect to the receiver antenna 26 (shown as R) in an indoor environment is there depicted. Transmitter antenna T is shown at a vertical displacement **a** and a horizontal displacement r_{c} (corresponding to the radius of the critical region, as explained below) relative to the receiver antenna R. Transmitter antenna T transmits a LOS signal S as well as a multipath signal S'. Multipath signal S' is transmitted at an angle Θ with respect to a vertical reference and is reflected at reflection points 43 and 44 as shown. LOS signal S is transmitted at an angle φ with respect to multipath signal S'. The critical region proximate receiver antenna R is defined as that region for which the image I₂ is within the beamwidth Φ of the receiver antenna 26 that is directed or pointed at or otherwise oriented with the transmitter antenna T. Thus, for a cone-shaped beam transmitted by transmitter T and a relatively small angle φ, the radius r_{c} of the critical region may be readily calculated. By rotating FIG. 3 in the third dimension, the critical regions may be approximated as cones having a base with a radius r_{c} -- which may be located along the floor 42, long walls 32, 34 or short walls 36, 38 -- and an apex at the transmitter antenna 16. The critical regions for different transmitter locations are depicted, by way of example, in FIGs. 4a - 4c. As shown, the critical regions vary as a function of the location of the transmitter antenna identified as T₁, T₂ and T₃ in FIGS. 4a, 4b and 4c, respectively.

If the receiver antenna 26 is located within the critical region, then the bit error rate may be unacceptably high, and a link outage (link failure) will occur. However, this will only happen if the reflection coefficients at the reflection points 43 and 44 in FIG. 3 are sufficiently high so that the power in the multipath ray S' is significant.

For binary phase shift keying (BPSK) modulation, such outage is not likely to occur because, even if the reflection coefficients are near unity, the power of the multipath ray S' will be less than that of the direct ray S as a result of the multipath ray travelling approximately 3 times the distance travelled by the direct ray. Thus, for BPSK modulation, link outage does not occur unless the multipath ray S' is of the same or greater power than the direct ray S.

Having determined the critical region for a desired transmitter antenna location, the fractional outage ratio 0_{f}, which is defined as the ratio of the volume of the critical region to the volume V of the space or room 30 containing the transmitter antenna, can be calculated. Thus, for a particular room the fractional outage ratio 0_{f} may for example be calculated for several locations of a transmitter antenna whereby, based on the smallest resulting value of 0_{f}, the most suitable locations for the transmitter antenna and receiver antenna can be determined; i.e. the antennas are positioned outside of the critical regions so as to reduce the incidence and reception of multipath rays. In other words, the fractional outage ratio O_{f} represents the probability that significant multipath rays will exist in any location. By selecting the lowest value for O_{f}, the most efficient location for the transmitter antenna and, correspondingly, the receiver antenna can be determined. It should accordingly now be apparent that using properly placed directional antennas having a narrow beamwidth in a high-speed indoor wireless system will greatly reduce the amount of multipath which, in turn, allows for notably higher data transmission speeds.

The system of the present invention may also be employed for non-line of site (NLOS) links, i.e. where the antennas of the transmitter and receiver are, by way of example, located in separate rooms. For a receiver antenna 26 in a NLOS room adjacent to the LOS room containing a transmitter antenna 16, there are several ray paths that potentially contribute to multipath within the critical region. However, it has been found that depending on the value of the power transmission coefficient through the common wall between the LOS and NLOS rooms, and assuming that the two rooms have substantially like dimensions of height, width and depth, then the fractional outage ratio 0_{f} for the NLOS room is only slightly greater than the fractional outage ratio in the line of site room. Thus, a receiver 22 with a narrow beamwidth directional antenna 26 may be positioned in a NLOS room and still receive high speed data transmissions without significant multipath distortion or losses.

Lastly, and as discussed above, the present invention may alternatively be implemented using an omnidirectional antenna, instead of a narrow beamwidth antenna, at the transmitter 12. Employing an omnidirectional antenna in this manner results in the benefit that the directional receiver antenna 26 may be pointed at any image generated by the omnidirectional antenna rather than directly at the transmitter antenna. However, if multiple signal images due to multipath rays fall within the beamwidth of the receiver antenna 26, then distortion or losses will result. The same holds true for an arrangement wherein an omnidirectional antenna is employed at the receiver 20 and a narrow beamwidth antenna is used at the transmitter 12. Thus, by using an omnidirectional antenna at either (but not both) the transmitter 12 or the receiver 20, there are more ray paths which can be exploited to establish a link. However, by using an omnidirectional antenna at the transmitter 12 the effect of objects near the transmitter becomes more pronounced. In particular, additional ray paths will arise from single reflections from walls or objects resulting in multipath which would not occur with a directional antenna at the transmitter. Such multipath may be eliminated by utilizing a broad beam transmission antenna, as opposed to an omnidirectional antenna, having a beamwidth in the range of 90° to 100° and a carefully controlled transmission signal which does not illuminate the immediately adjacent walls or the ceiling of the indoor environment.

While there have been shown and described and pointed out fundamental novel features of the invention as applied to currently preferred embodiments thereof, it will be understood that various omissions and substitutions and changes in the form and details of the devices illustrated, and in their operation, may be made by those skilled in the art without departing from the spirit of the invention. It is the intention, therefore, to be limited only as indicated by the scope of the claims appended hereto.

## Claims

1. A high speed wireless data transfer system for use in an indoor environment having a floor, a ceiling and at least one wall from which unwanted multipath signals are generated by reflection of transmitted data signals, said system comprising:
a data source for generating a data signal;
a transmitter connected to said data source and having a transmitter antenna with a beamwidth positioned within the indoor environment for transmitting the data signal at a selected carrier frequency; and
a receiver having a receiver antenna with a beamwidth positioned within the indoor environment for receiving the data signal transmitted at the selected carrier frequency, the beamwidth of said receiver antenna being sufficiently narrow and selected so as to avoid reception of substantially all multipath signals, so that the received data signal is substantially error free.

2. The system of claim 1, wherein said receiver antenna is a directional antenna directed at said transmitter antenna and wherein the beamwidth of said receiver antenna is in the range of approximately 5° to 15°.

3. The system of claim 2, wherein said beamwidth of said transmitter antenna is sufficiently narrow and is selected so as to substantially minimize generation of multipath signals in the indoor environment.

4. The system of claim 3, wherein said transmitter antenna is a directional antenna directed at said receiver antenna and wherein the beamwidth of said transmitter antenna is in the range of approximately 5° to 15°.

5. The system of claim 1, further comprising means for positioning one of said transmitter and receiver antennas.

6. A high speed wireless data transfer system for use in an indoor environment having a floor, a ceiling and at least one wall from which unwanted multipath signals are generated by reflection of transmitted data signals, said system comprising:
a data source for generating a data signal;
a transmitter connected to said data source and having a transmitter antenna with a beamwidth positioned within the indoor environment for transmitting the data signal at a selected carrier frequency, the beamwidth of said transmitter antenna being sufficiently narrow and selected so as to limit creation of multipath signals; and
a receiver having a receiver antenna with a beamwidth positioned within said indoor environment for receiving the data signal transmitted at the selected carrier frequency such that the received data signal is substantially free of multipath signals.

7. The system of claim 6, wherein said transmitter antenna is a directional antenna directed at said receiver antenna and wherein the beamwidth of said transmitter antenna is in the range of approximately 5° to 15°.

8. The system of claim 7, wherein said beamwidth of said receiver antenna is sufficiently narrow and selected so as to avoid reception of substantially all multipath signals.

9. The system of claim 8, wherein said receiver antenna is a directional antenna directed at said transmitter antenna and wherein the beamwidth of said receiver antenna is in the range of approximately 5° to 15°.

10. The system of claim 6, further comprising means for positioning one of said transmitter and receiver antennas.

11. A method for transmitting and receiving a data signal at high speeds in a wireless data transfer system operating in an indoor environment in which unwanted multipath signals are generated by reflection of transmitted data signals and wherein critical regions exist as a function of transmitting antenna placement, said method comprising the steps of:
generating a data signal;
transmitting at a selected carrier frequency the generated data signal using a transmitter having a transmitter antenna with a beamwidth positioned at a predetermined location within the indoor environment; and
receiving the transmitted data signal using a receiver having a receiver antenna with a beamwidth positioned within said indoor environment, said receiver antenna beamwidth being sufficiently narrow and selected so as to avoid reception of substantially all multipath signals, so that the received signal is substantially error free.

12. The method of claim 11, further comprising the steps of determining locations of the critical regions in the indoor environment and positioning said transmitter and receiver antennas at locations within the indoor environment selected to avoid the critical regions and so as to minimize receipt of multipath signals by the receiver antenna.
